# EUROPÄISCHE PATENTANMELDUNG

(11) **EP 3 534 240 A1**
(43) Veröffentlichungstag der Anmeldung: **04.09.2019**
(21) Anmeldenummer: 18159576.0
(22) Anmeldetag: 01.03.2018
(51) Int. Cl.: G06F 3/01, G06F 3/0346

(54) **VERFAHREN UND VORRICHTUNG ZUR DATEN-ANNOTATION**

(71) Anmelder: CMORE Automotive GmbH, 88131 Lindau (Bodensee) (DE)
(72) Erfinder: MATENAER, Gregor, 88142 Wasserburg (DE); ZOBEL, Matthias, 88142 Wasserburg (DE); GRÜNER, Patrick, 87700 Memmingen (DE)
(74) Vertreter: Otten, Roth, Dobler & Partner mbB Patentanwälte

(57) **Zusammenfassung**

Vorgeschlagen wird ein Verfahren zur Visualisierung von Sensordaten zur Annotierung und/oder zum Labeln durch einen Betrachter, um die Sensordaten mit Labeln zu versehen und diesen somit eine Zusatzinformation zuzuteilen. Um eine Annotierung bzw. ein Label effektiver gestalten zu können, werden als Sensordaten 3-D-Koordinaten einer dreidimensionalen Bildaufnahme verwendet und/oder eingelesen sowie eine Darstellung der Sensordaten als dreidimensionales Bild vorgenommen, wobei insbesondere die Sensordaten als Punktwolke (M) aus 3-D-Koordinaten dargestellt werden, wobei vorzugsweise einzelne Punkte und/oder Punktgruppen als Objekte dargestellt werden.

## Beschreibung

Die Erfindung betrifft ein Verfahren zur Visualisierung von Sensordaten zur Annotierung und/oder zum Labeln durch einen Betrachter nach dem Oberbegriff des Anspruchs 1 sowie eine Vorrichtung zur Visualisierung von Sensordaten zur Annotierung und/oder zum Labeln nach dem Oberbegriff des Anspruchs 7.

### Stand der Technik

Im Bereich der Fahrerassistenzsysteme sind die Sensordaten typischerweise Kamerabilder, Radar- oder Lidar-Daten. Diese Daten werden für eine korrekte Interpretation des Fahrzeugumfelds von Algorithmen in den Steuergeräten ausgewertet und eine entsprechende Systemreaktion veranlasst, beispielsweise wird eine Notbremsung eingeleitet, oder ein anderes Fahrmanöver ausgeführt. Die dabei eingesetzten Algorithmen werden üblicherweise mittels statistischen Verfahren angelernt. So müssen sie beispielsweise lernen, wie eine bestimmte räumliche und zeitliche Kombination von Bildpunkten zu interpretieren ist, um abgebildete Objekte der aufgenommenen Szene voneinander unterscheiden zu können. So könnte beispielsweise eine Ansammlung von roten Pixeln eine Ampel oder aber einen roten Anorak einer Person bedeuten, was dann natürlich zu einer unterschiedlichen Systemreaktion führt.

In einem bislang aufwändigen Verfahren müssen nach dem Stand der Technik die Sensordaten so aufbereitet und mit einer Bedeutung versehen werden, dass die Algorithmen an diesen Beispielen lernen, eine solche Unterscheidung selbst möglichst fehlerfrei durchführen zu können. Dabei kommen aktuell Softwarewerkzeuge zum Einsatz welche die Sensordaten für einen menschlichen Benutzer visualisieren und dieser sie dann manuell mit unterschiedlichen Bedeutungen versehen kann. Dieser Prozess ist als manuelle Annotierung bzw. Labeln bekannt.

Für das Annotieren von Daten werden üblicherweise nach dem Stand der Technik Computerprogramme verwendet, bei denen der Benutzer die Messdaten an einem üblichen Bildschirmarbeitsplatz mittels Maus und Tastatur annotiert. Handelt es sich bei den Daten um Bilder oder Videosequenzen, bei denen die einzelnen Bildpunkte annotiert werden, ist dies gängige Praxis. Die Darstellung und Verarbeitung solcher 2-D-Daten aus dem Stand der Technik ist auf dem ebenfalls zweidimensionalen Bildschirm eines Computers eine passende Methode.

Aufgabe der Erfindung ist es, eine Annotierung bzw. ein Labeln derartiger Sensordaten effektiver durchführen zu können.

Die Aufgabe wird, ausgehend von einem Verfahren bzw. einer Vorrichtung der eingangs genannten Art, durch die kennzeichnenden Merkmale des Anspruchs 1 bzw. des Anspruchs 7 gelöst.

Durch die in den abhängigen Ansprüchen genannten Maßnahmen sind vorteilhafte Ausführungen und Weiterbildungen der Erfindung möglich.

Dementsprechend zeichnet sich die Erfindung dadurch aus, dass als Sensordaten 3-D-Koordinaten einer dreidimensionalen Bildaufnahme verwendet und/oder eingelesen werden und eine Darstellung der Sensordaten als dreidimensionales Bild vorgenommen wird.

Der Einsatz von Verfahren der "Künstlichen Intelligenz" (KI) ist in allen Lebensbereichen auf dem Vormarsch. Eine besondere Rolle spielen dabei die Methoden des "Maschinellen Lernens", bei denen ausgehend von lehrreichen Beispieldaten versucht wird, automatisch die Lösung einer Aufgabe zu lernen und auf andere ungesehene Daten zu verallgemeinern. Die Güte des Lernens hängt dabei stark von den während der Lernphase verarbeiteten Trainingsbeispielen ab. Daher wird in die Erstellung der Trainingsdaten viel Aufwand gesteckt, vor allem manueller Art. Dabei werden im Allgemeinen die Eingangsdaten mit für die Anwendung spezifischen Bedeutungen versehen, welche während des Trainings als Referenz für das automatische Lernverfahren dienen. Vielfach stammen die Eingangsdaten dabei von physikalischen Sensoren.

Wegen der großen Menge an Daten, die für das Trainieren der Algorithmen benötigt wird, muss dieses manuelle Annotieren möglichst effizient durchführbar sein.

Aber nicht nur zum Trainieren der Algorithmen werden die annotierten Daten benötigt. Auch für das Testen und Validieren der Algorithmen sind Vergleichsdaten notwendig. Die Entscheidungen der Algorithmen auf einer ihnen unbekannten Testdatenmenge, werden dabei nach der Trainingsphase in einem Testschritt mit den Annotationen dieser Daten verglichen und damit ist eine Bewertung der Güte und der Performance der Algorithmen möglich.

Ein zweidimensionales Kamerabild, wie herkömmlich aus dem Stand der Technik bekannt, kann sehr einfach auf einem Computermonitor dargestellt und bearbeitet werden.

Eine besondere Herausforderung stellt jedoch die Verarbeitung von 3-D-Daten dar. Beispielsweise liefert ein Lidar-Sensor eine Punktwolke von Messwerten und damit eine Repräsentation des dreidimensionalen Raums um den Sensor herum. Hier stößt man mit den Möglichkeiten eines zweidimensionalen Computermonitors schnell an die Grenzen einer effizienten Darstellung und Bearbeitung. So ist es beispielsweise für die Annotierung solcher Punktwolken und ihrer Einzelmesswerte schwierig, die optimale Perspektive auf die Daten zu finden, die eine effiziente Erfassung durch den Menschen und eine entsprechende Bearbeitung zulässt. Dies erfordert von den Benutzern sehr viel Übung und Erfahrung, durch entsprechende Drehungen der Punktwolkendarstellung sich in dieser zurechtzufinden und Messpunkte realen Objekten zuzuordnen.

Die vorliegende Erfindung beschreibt ein System, ein Verfahren bzw. eine Vorrichtung, zur effizienten Annotierung von 3-D-Daten. Mittels der VR- Technologie (VR = Virtuelle Realität) wird die Grenze zwischen 2-D und 3-D an der Mensch-Maschine-Schnittstelle aufgehoben und man kann als virtueller Teilnehmer der dreidimensionalen Umgebung direkt in den 3-D-Daten navigieren, mit den 3-D-Daten interagieren und so eine natürliche Vorgehensweise für die effiziente Annotierung realisieren.

Die Erfindung stellt folglich ein System zum Annotieren von Daten mittels "Virtueller Realität" vor.

Ausführungsbeispiele der Erfindung sind in den Zeichnungen dargestellt und werden unter Angabe weiterer Einzelheiten und Vorteile näher erläutert. Im Einzelnen zeigen:
- Fig. 1:: Bestandteile des Systems einer Vorrichtung gem. der Erfindung,
- Fig. 2:: Navigation in einer Punktwolke mittels Teleportation,
- Fig. 3:: Annotation von Messpunkten durch virtuelle Berührung,
- Fig. 4:: Annotation von Messpunkten durch Auswahl-Strahl,
- Fig. 5:: Annotation durch Überstreichen eines Bereichs von Messpunkten, sowie
- Fig. 6:: eine automatische Auswahl von Messpunkten über Repräsentanten.

Die Daten stammen beispielsweise von einem Lidar-Sensor, montiert auf einem Autodach. Lidar-Sensoren tasten die Umwelt mittels Laserstrahlen ab und liefern, basierend auf der Laufzeit des Lichts, ein räumliches Abbild der Umgebung in Form einer Punktwolke.

Beim Vorgang des Annotierens, auch als "Labeln" bekannt, werden den Daten oder Teilen von ihnen, abstrakte Bedeutungen zugewiesen. Beispielsweise werden in der Lidar-Punktwolke einzelne oder mehrere Messpunkte mit einer oder mehreren Bedeutungen, den so genannten Labeln versehen, die angeben, von welchem Typ von Objekt die Messpunkte während der Messung reflektiert wurden, z. B. von einem Auto, Fußgänger oder von einer Hauswand. Messpunkte, die von demselben realen Objekt stammen, können auf diese Art gruppiert werden und beispielsweise mit einer eindeutigen Objekt-ID versehen werden. Die Art und Weise wie und welche Labels vergeben werden, ist vielfältig und bestimmt vom Kontext, in dem die Daten erfasst wurden, und sie ist zugeschnitten auf die geplante weitere Verwendung und Verarbeitung der Daten und der Label nach der Annotierung.

Handelt es sich jedoch um 3-D-Daten, wie bei den Lidar-Punktwolken, ist eine Bearbeitung mittels eines zweidimensionalen Mediums, wie herkömmlich aus dem Stand der Technik bekannt, meist sehr aufwendig. Für die Bearbeitung müssen die 3-D-Daten auf das 2-D-Medium angepasst werden. Typischerweise werden die Daten auf den Bildschirm mittels eines mathematischen Kameramodells projiziert und dadurch visualisiert. Die Annotierung der Daten erfolgt dann auf Basis dieser Visualisierung. Für eine effiziente Bearbeitung der Daten ist dabei die Wahl der Perspektive und des Projektionsmodells entscheidend. Es erfordert vom Benutzer eine enorme räumliche Vorstellungskraft und viel Übung und Erfahrung, für die jeweilige Annotations-Aufgabe eine geeignete Perspektive auf die Daten zu wählen.

Das hier beschriebene System umgeht dies, in dem es auf die dimensionsreduzierende Projektion der 3-D-Daten verzichtet und dem Benutzer eine natürlichere, weil dreidimensionale, Darstellung der zu annotierenden Daten ermöglicht. Darüber hinaus werden dem Benutzer durch die Mensch-Maschine-Schnittstelle des Systems, ohne Maus und Tastatur, neuartige Möglichkeiten zur Interaktion und Bearbeitung gegeben, die ein effizientes Annotieren von 3-D-Daten erlauben.

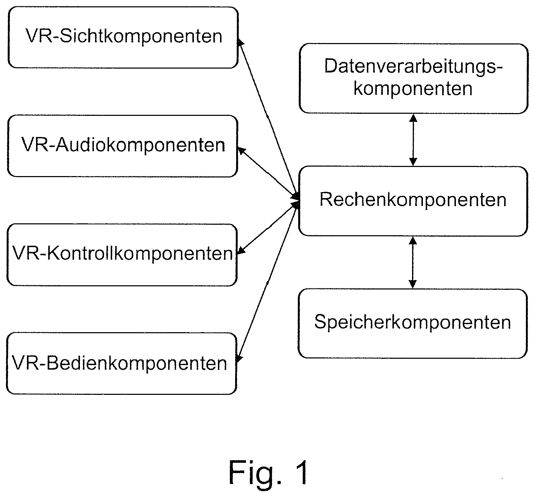

Eine Vorrichtung zur Visualisierung von Sensordaten zur Annotierung und/oder zum Labeln kann bei Ausführungsbeispielen der Erfindung wenigstens eines der folgenden Bestandteile aufweisen (vgl. Fig. 1):
- Rechenkomponente und/oder
- VR-Sichtkomponente und/oder
- VR-Kontrollkomponente und/oder
- VR-Audiokomponente und/oder
- VR-Bedienkomponente und/oder
- Datenverarbeitungskomponente und/oder
- Speicherkomponente.

Die Rechenkomponenten (z.B. eine Rechnereinheit) steuern den gesamten Ablauf und die Integration der anderen Systemkomponenten auf Hardware-Ebene. Sie stellt auch die Laufzeitumgebung für die Datenverarbeitungskomponente mit den entsprechenden Schnittstellen zur Hardware bereit.

Die VR-Sichtkomponenten realisieren die visuelle Schnittstelle zwischen Benutzer und der virtuellen Welt. Sie projizieren beispielsweise über eine spezielle Brille das simulierte Umfeld auf zwei Bildschirme vor den Augen des Benutzers. Unter Ausnutzung des stereoskopischen Sehens entsteht im Gehirn des Benutzers ein dreidimensionaler, räumlicher Eindruck der Daten.

Die VR-Kontrollkomponenten sind mit den Rechenkomponenten verbunden. Sie erlauben die Beobachtung des Benutzers und seiner Aktionen und liefern Informationen darüber an die Rechenkomponenten. Diese wandelt die Information in Steuerbefehle für die zu den Benutzeraktionen passende Darstellung der simulierten Welt. Beispielsweise werden die Drehungen des Kopfs und Bewegungen des Benutzers überwacht und die Darstellung in der VR-Sichtkomponente zur Kopfdrehung entsprechend angepasst.

Mittels der VR-Audiokomponenten (Kopfhörer, Lautsprecher, Mikrofone, etc.) ist eine Interaktion mit der simulierten Welt bzw. mit der Datenverarbeitungskomponente möglich. Beispielsweise kann eine Sprachsteuerung und ein auditives Feedback darüber realisiert werden.

Die Interaktion zur Annotation der Daten erfolgt über die VR-Bedienkomponenten. Typischerweise handelt es sich dabei um Steuerungskomponenten mit verschiedenen Bedienelementen, wie Knöpfe und Joysticks, die in den Händen gehalten werden, ähnlich zu den Controllern, wie man sie von Spielekonsolen kennt.

Die Datenverarbeitungskomponenten realisieren das Zusammenspiel aller Systemkomponenten auf logischer und algorithmischer Ebene. Sie kümmern sich unter anderem um das Datenhandling, um die Berechnung der darzustellenden virtuellen Realität, um die Annotation-Ablaufsteuerung und um die Benutzerschnittstelle.

Die zu verarbeitenden Daten werden von Speicherkomponenten gelesen und zur Verarbeitung in solchen temporär gehalten. Die Annotationsergebnisse werden ebenso flüchtig zunächst in den Speicherkomponenten gehalten und abschließend auf den Speicherkomponenten persistent festgehalten.

In den folgenden Abschnitten werden exemplarisch die wichtige Funktionsweisen einzelner Ausführungsvarianten vorgestellt: Navigation und Annotierungs-Methodik.

### Navigation und Interaktion

Die Navigation und Interaktion in der virtuellen Realität erfolgt hier in der Regel über Bewegungen des Kopfs des Benutzers und die Interaktion erfolgt über die VR-Bedienkomponenten, die typischerweise in den Händen gehalten werden. Durch die VR-Kontrollkomponenten wird die Kopfbewegung des Benutzers, und damit die VR-Sichtkomponenten, verfolgt und die Darstellung der Ansicht auf die zu annotierenden Daten entsprechend angepasst. Die translatorischen Bewegungen in der virtuellen Realität erfolgen über die VR-Bedienkomponenten. Mittels dieser kann sich der Benutzer in der virtuellen Realität in allen drei Dimensionen bewegen.

Es hat sich für die Einlernphase neuer Benutzer an das System als vorteilshaft erwiesen, die Freiheitsgrade bei den Bewegungen zunächst programmtechnisch einzuschränken. Dies ermöglicht ein Gewöhnen an das System und beugt dem bekannten Phänomen der Motions-Sickness vor. Beispielsweise kann zunächst die Bewegung des Benutzers auf eine horizontale Ebene eingeschränkt werden. Oder auch eine Reduzierung der Navigationsgeschwindigkeit und der -beschleunigung ist möglich. Damit wird ein unbeabsichtigtes "Herumfliegen" in den Daten vermieden.

Diese Einschränkungen sind aber nicht nur auf die Gewöhnungsphase beschränkt. Je nach Datenlage und Annotations-Aufgabe kann eine Beschneidung der Bewegungsmöglichkeiten sich als günstig und effizient erweisen.

### Teleportations-Navigations-Methode

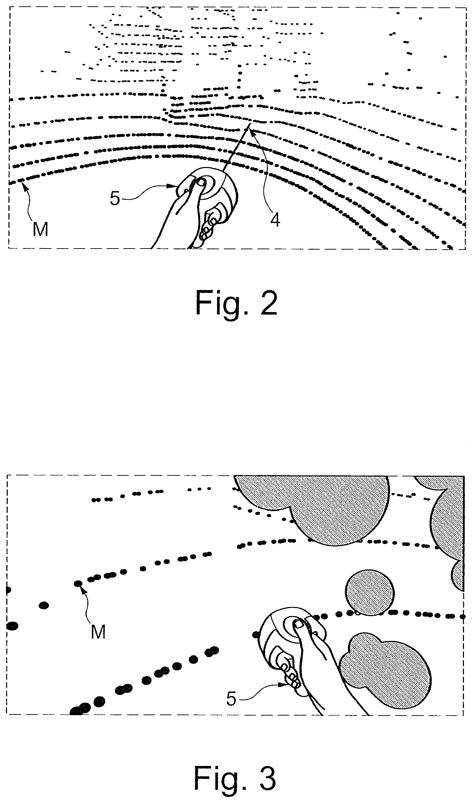

Eine Alternative zur oben beschriebenen Navigationsmethode bietet bei einer Ausführungsform eine instantane räumlich gerichtete Navigation mittels Teleportation. Dabei richtet der Benutzer einen Navigationsstrahl 4 in die Richtung, in die er sich bewegen möchte (s. Fig. 2). Mittels der VR-Bedienkomponenten 5 kann er dann die Bewegung entlang dieses Strahls auslösen. Über die VR-Bedienkomponenten kann er dabei weitere Parameter für die Navigation festlegen. Beispielsweise kann der Benutzer die Entfernung, die während der Navigation entlang des Strahls zurückgelegt werden soll, frei wählen. Dies ermöglicht eine rasche Navigation durch die Messdaten und erlaubt ein zielgerichtetes Springen an für die Annotation interessante Stellen.

### Methoden zur Annotation mit VR

Durch die Integration von VR lassen sich neuartige Annotations-Methoden realisieren. Nachfolgend sind einige der implementierten Methoden aufgeführt.

### Annotieren durch Berühren

Beim Annotieren durch Berühren werden die Messpunkte M durch virtuelles Berühren mit den in die Simulation eingeblendeten VR-Bedienkomponenten 5 ausgewählt und mit einem Label versehen (s. Fig. 3). Der Benutzer kann sich so nacheinander alle relevanten Messpunkte M auswählen und diese annotieren. Durch ein haptisches Feedback in den VR-Bedienkomponenten 5 erhält der Benutzer dabei eine Rückmeldung über den Erfolg seiner Aktionen. Beispielsweise können die VR-Bedienkomponenten 5 bei der Berührung eines Messpunkts vibrieren und damit das Gefühl eines spürbaren Widerstands beim Benutzer erzeugen.

### Annotieren aus der Ferne

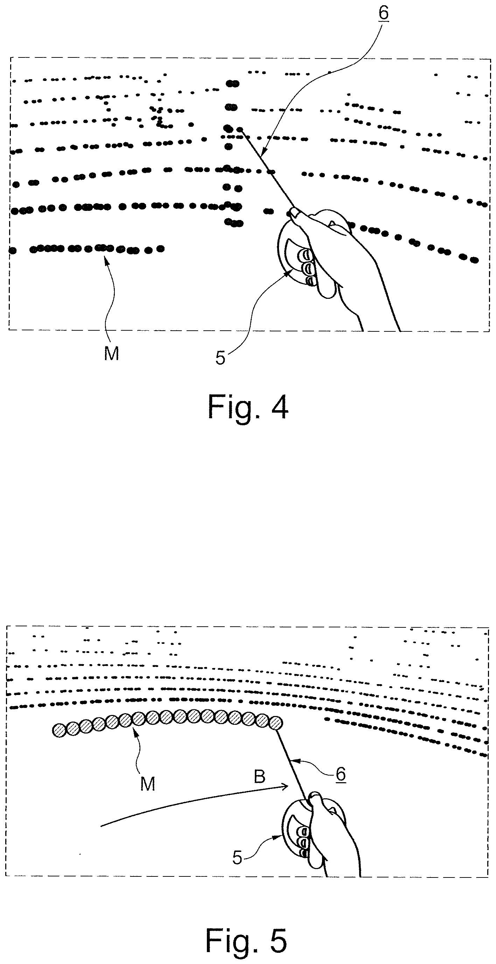

Im Gegensatz zum Annotieren durch Berühren lassen sich in der simulierten Welt Messpunkte M auch aus der Ferne annotieren (s. Fig. 4). Es handelt sich um eine berührungslose Methode, bei der der Benutzer einen Messpunkt mittels eines eingeblendeten Auswahl-Strahls 6 markieren und annotieren kann. Neben dem haptischen Feedback über die VR-Bedienkomponenten 5 sind dabei vielfältige Arten von Unterstützung bei der Messpunkt-Auswahl realisierbar. Beispielsweise kann der Auswahl-Strahl 6 so ausgelegt werden, dass er bei Bewegung immer nur auf Messpunkten M einrastet, was die Navigation durch die Punktwolke aus der Ferne stark erleichtert.

### Annotieren durch Überstreichen

Alternativ zu Auswahl einzelner Messpunkte bietet das System die Möglichkeit kontinuierlich Messpunkte M während der

Bewegung B zu annotieren. Dies kann sowohl durch Berühren oder berührungslos realisiert sein (s. Fig. 5).

### Semi-automatisches Annotieren

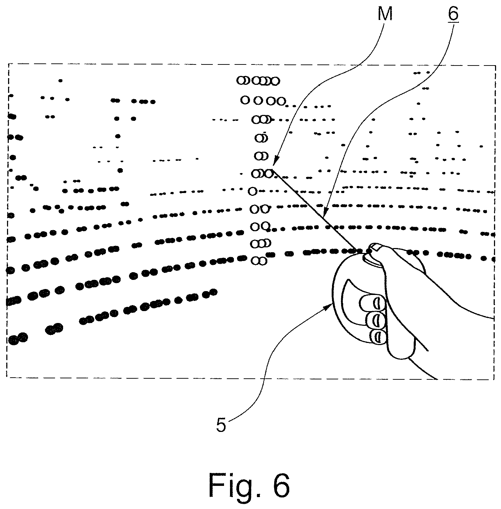

Eine besonders effiziente Möglichkeit der Messpunkt-Auswahl und Annotation ergibt sich, wenn die manuelle Auswahl des Benutzers auf die Auswahl eines für ein Objekt repräsentativen Messpunkt M reduziert werden kann und die Datenverarbeitungskomponente automatisch die ebenfalls zu diesem Objekt gehörenden Messpunkte auswählt und gleichsam wie den Repräsentanten annotiert (s. Fig. 6). Die automatische Auswahl erfolgt dabei mittels intelligenter Gruppierungs- und Verarbeitungsalgorithmen. Durch die weitergehende Integration solcher Ansätze liegt in dieser Vorgehensweise in Verbindung mit den oben beschriebenen manuellen Annotations-Methoden ein sehr großes Potenzial zur effizienten Verarbeitung großer Datenmengen.

Zusammengefasst liegen die Vorteile der Erfindung und ihrer Ausführungsbeispiele in der erhöhten Effizienz beim Annotieren von 3-D-Daten durch eine an die Daten angepasste Mensch-Maschine-Schnittstelle und daran angepasste Annotations-Methoden. Dies wird durch die Verwendung von VR-Technologie erreicht.

Je nach Ausführungsbeispiel ergeben sich vielfältige Erweiterungsmöglichkeiten, z.B.:
- Integration weiterer Annotierungs-Methoden und/oder
- Integration weiterer Navigations-Methoden und/oder
- statische Anpassung der Visualisierung je nach Daten oder Annotations-Methode und/oder
- dynamische Anpassung der Visualisierung je nach Aufgabe oder Annotations-Verlauf und/oder
- Integration und Visualisierung zusätzlicher Sensordaten, z.B. Kamerabilder und/oder
- gleichzeitiges Annotieren von Daten durch mehrere Benutzer in der gleichen simulierten Welt und/oder
- Gamification: Darstellen und Ausführen der Annotations-Aufgabe mit spieltypischen Elementen, z. B. Belohnungssystem anhand von Geschwindigkeit oder Wettbewerb, etc.

Die Performance der Rechnereinheiten steigern die Fähigkeiten und speziell das Auflösungsvermögen der VR-Sichtkomponenten. Ferner eignet sich die Erfindung besonders gut, Komponenten aus dem Bereich der künstlichen Intelligenz zu implementieren.

### Bezugszeichen:

- 4: Navigationsstrahl
- 5: Bedienkomponente
- 6: Auswahl-Strahl
- B: Bewegung
- M: Messpunkt / Messpunktgruppe

## Patentansprüche

1. Verfahren zur Visualisierung von Sensordaten zur Annotierung und/oder zum Labeln durch einen Betrachter, um die Sensordaten mit Labeln zu versehen und diesen somit eine Zusatzinformation zuzuteilen, **dadurch gekennzeichnet, dass**
- als Sensordaten 3-D-Koordinaten einer dreidimensionalen Bildaufnahme verwendet und/oder eingelesen werden
- eine Darstellung der Sensordaten als dreidimensionales Bild vorgenommen wird, wobei insbesondere die Sensordaten als Punktwolke aus 3-D-Koordinaten dargestellt werden, wobei vorzugsweise einzelne Punkte und/oder Punktgruppen als Objekte dargestellt werden.

2. Verfahren nach einem der vorgenannten Ansprüche, **dadurch gekennzeichnet, dass** die Sensordaten wenigstens teilweise mit wenigstens einem der folgenden Sensoren aufgenommen werden:
- mit einer Kamera
- mit einem Radar-Sensor,
- mit einem Lidar-Sensor,
- mit einem Audioaufnahmegerät, insbesondere einem Mikrofon.

3. Verfahren nach einem der vorgenannten Ansprüche, **dadurch gekennzeichnet, dass** die Darstellung der Sensordaten als stereoskopische Darstellung unter Verwendung von zwei aus verschiedenen Winkeln aufgenommenen Bildern, insbesondere als Darstellung der zwei winkelversetzt aufgenommenen Bilder auf zwei nebeneinander angeordneten Bildschirmen, wobei eine Brille verwendet wird, die das rechte Auge des Betrachters nur den nach dem stereoskopischen Sehen dem rechten Auge zugeordneten Bildschirm und entsprechend das linke Augen nur den dem linken Auge zugeordneten Bildschirm erkennen lässt.

4. Verfahren nach einem der vorgenannten Ansprüche, **dadurch gekennzeichnet, dass** eine Beobachtung der Bewegungen und/oder Haltungen des Betrachters, insbesondere eine Beobachtung der Bewegung, vorzugsweise der Drehung und/oder Neigung und/oder Positionierung des Kopfes, durchgeführt wird, um in Abhängigkeit der detektierten Bewegung und/oder Haltung die Darstellung der Sensordaten, insbesondere in Bezug auf die Perspektive der Darstellung, abzuändern.

5. Verfahren nach einem der vorgenannten Ansprüche, **dadurch gekennzeichnet, dass** eine Sprachsteuerung und/oder eine Bedienkomponente, insbesondere wenigstens ein Knopf und/oder ein Joystick, zur Änderung und/oder Anpassung der Darstellung und/oder zum Annotieren und/oder Labeln verwendet wird.

6. Verfahren nach einem der vorgenannten Ansprüche, **dadurch gekennzeichnet, dass** eine Rechnereinheit zur Verarbeitung der Sensordaten vorgesehen ist, insbesondere zur graphischen Aufbereitung der Sensordaten, zur Umrechnung der perspektivischen Darstellung und/oder zum Zuordnen von Sensordaten zu einzelnen Objekten.

7. Vorrichtung zur Visualisierung von Sensordaten zur Annotierung und/oder zum Labeln durch einen Betrachter, um die Sensordaten mit Labeln zu versehen und diesen somit eine Zusatzinformation zuzuteilen, **dadurch gekennzeichnet, dass** eine Sichtkomponente zur virtuellen Darstellung von Sensordaten in Form von Bilddaten einer dreidimensionalen Bildaufnahme als dreidimensionales Bild vorhanden ist, wobei insbesondere die Vorrichtung dazu ausgebildet ist, eine Darstellung der Sensordaten als Punktwolke aus 3-D-Koordinaten vorzunehmen, wobei vorzugsweise einzelne Punkte und/oder Punktgruppen als Objekte dargestellt werden.

8. Vorrichtung nach einem der vorgenannten Ansprüche, **dadurch gekennzeichnet, dass** die Sichtkomponente zur stereoskopischen Darstellung unter Verwendung von zwei aus verschiedenen Winkeln aufgenommenen Bildern ausgebildet ist, insbesondere als Darstellung der zwei winkelversetzt aufgenommenen Bilder auf zwei nebeneinander angeordneten Bildschirmen, um mit einer Brille das rechte Auge des Betrachters nur den nach dem stereoskopischen Sehen dem rechten Auge zugeordneten Bildschirm erkennen zu lassen und entsprechend für das linke Auge zu verfahren.

9. Vorrichtung nach einem der vorgenannten Ansprüche, **dadurch gekennzeichnet, dass** eine Kontrollkomponente zur Beobachtung der Bewegungen und/oder Haltungen des Betrachters, insbesondere eine Beobachtung der Bewegung, vorzugsweise der Drehung und/oder Neigung und/oder Positionierung des Kopfes, vorgesehen ist, um in Abhängigkeit der detektierten Bewegung und/oder Haltung Steuerbefehle an die Sichtkomponente weiterzuleiten, um die Darstellung der Sensordaten, insbesondere in Bezug auf die Perspektive der Darstellung, abzuändern.

10. Vorrichtung nach einem der vorgenannten Ansprüche, **dadurch gekennzeichnet, dass** eine Sprachsteuerungskomponente und/oder eine Bedienkomponente, insbesondere wenigstens ein Knopf und/oder ein Joystick, zur Änderung und/oder Anpassung der Darstellung und/oder und/oder zum Markieren von Objekten und/oder zum Annotieren und/oder Labeln vorgesehen ist/sind.

11. Vorrichtung nach einem der vorgenannten Ansprüche, **dadurch gekennzeichnet, dass** die Bedienkomponente dazu ausgebildet ist, eine räumlich gerichtete Navigation, insbesondere eine instantane räumlich gerichtete Navigation , vorzugsweise eine Teleportationsnavigation auszuführen, indem die Bedienkomponente dazu ausgebildet ist, eine Richtung durch Ausrichtung der Bedienkomponente zu erfassen.

12. Vorrichtung nach einem der vorgenannten Ansprüche, **dadurch gekennzeichnet, dass** die Bedienkomponente dazu ausgebildet ist, ein dargestelltes Objekt zu markieren und/oder zu labeln und/oder zu annotieren, wobei das Objekt über eine Positionierung der Bedienkomponente auswählbar ist.

13. Vorrichtung nach einem der vorgenannten Ansprüche, **dadurch gekennzeichnet, dass** die Bedienkomponente mit der Sichtkomponente derart gekoppelt ist, dass über die Sichtkomponente ein virtuelles Anzeigeelement, insbesondere ein Auswahl-Strahl darstellbar ist, welches über die Bedienkomponente positionierbar ist.

14. Vorrichtung nach einem der vorgenannten Ansprüche, **dadurch gekennzeichnet, dass** die Bedienkomponente dazu ausgebildet ist, einen Bedienvorgang, z.B. ein Markieren und/oder Labeln eines Objektes mit einem Signal zu kennzeichnen, insbesondere mit einem haptischen Signal, einem Vibrationssignal, einem optischen Signal, einem akustischen Signal oder dergleichen.
